# EUROPÄISCHE PATENTSCHRIFT

(11) **EP 0 514 580 B1**
(45) Veröffentlichungstag und Bekanntmachung des Hinweises auf die Patenterteilung: **23.08.1995**
(21) Anmeldenummer: 91108466.3
(22) Anmeldetag: 24.05.1991
(51) Int. Cl.: H02M 5/45, B60L 9/30

(54) **Umrichteranordnung**
Converter
Convertisseur

(43) Veröffentlichungstag der Anmeldung: 25.11.1992
(73) Patentinhaber: SIEMENS AKTIENGESELLSCHAFT, 80333 München (DE)
(72) Erfinder: Fuchs, Andreas, Dr.-Ing., W-8520 Erlangen (DE); Härer, Andreas, Dipl.-Ing., W-8520 Erlangen (DE); Niermeyer, Olaf, Dr.-Ing., W-8521 Möhrendorf (DE); Weschta, Alois, Dr.-Ing., W-8520 Buckenhof (DE)

(56) Entgegenhaltungen:
- EP-A- 0 384 222
- DE-A- 2 521 940
- ZEITSCHRIFT FÜR EISENBAHNWESEN UND VERKEHRSTECHNIK-DIE EISENBAHNTECHNIK-GLASERS ANNALEN, Bd. 114, Nr. 11, November 1990, Berlin, Seiten 492-502; A. WESCHTA : "Antriebstechnik für die neuen Hochleistungslokomotiven der Baureihe S252 der Spanischen Eisenbahnen"

## Beschreibung

Die Erfindung betrifft eine Umrichteranordnung gemäß Oberbegriff des Anspruchs 1.

Eine derartige Umrichteranordnung ist aus der DE-A-25 21 940 bekannt. Bei der bekannten Umrichteranordnung handelt es sich um eine Einrichtung zur Energierückführung aus mechanisch angetriebenen und/oder elektrisch gebremsten Motoren an Spinnereimaschinen. Um die Energie aus den mechanisch angetriebenen und/oder elektrisch gebremsten Motoren sowie ihre Wiederverwendung in elektrische Leistung aufnehmende Motoren zu ermöglichen, sind die Zwischenkreise über Ausgleichsleitungen miteinander verbunden. In den Ausgleichsleitungen ist jeweils wenigstens ein Schalter angeordnet, durch den ein gestörter Umrichter bei Bedarf abgeschaltet werden kann, wobei der ungestörte Umrichter weiterhin in Betrieb bleibt.

Weiterhin sind Umrichteranordnungen bekannt, die bei elektrischen Triebfahrzeugen zur Speisung der Fahrmotoren eingesetzt werden. Bei Hochleistungsfahrzeugen, z.B. Lokomotiven oder Triebköpfen, ist jedem Motor ein Umrichter zugeordnet, der aus einem Eingangsstromrichter bzw. einem Vierquadranten-Steller (Rückspeisemöglichkeit in das Stromnetz), einem Zwischenkreis und einem motorseitigen Stromrichter (Wechselrichter) besteht. Die Umrichteranordnung wird bei Wechselspannungslokomotiven von einem Transformator gespeist, der primärseitig an einer einphasigen Spannung anliegt. Bei Gleichstromeinspeisung liegt die Umrichteranordnung direkt am Fahrdraht. Pro Drehgestell ist eine Stromrichtereinheit mit einem gemeinsamen Zwischenkreis vorgesehen, die über Wechselrichter zwei Fahrmotoren speist.

Unabhängig von der Verschaltung der einzelnen Stromrichter bzw. der Vierquadranten-Steller mit der Sekundärwicklung führt ein Kurzschluß (z.B. Durchlegieren von Halbleiter-Elementen) in der Umrichteranordnung zu einem Totalausfall der diesem Zwischenkreis zugeordneten Fahrmotoren. Bei Abschaltung der Stromrichter in einem der beiden Drehgestelle sind dann nur noch 50 % des Anfahrmoments und der Traktionsleistung verfügbar.

Aufgabe der vorliegenden Erfindung ist es, eine Umrichteranordnung zu schaffen, bei der im Störungsfall noch möglichst viel Anfahrmoment erhalten bleibt.

Die Aufgabe wird erfindungsgemäß durch die im kennzeichnenden Teil von Anspruch 1 angegebenen Merkmale gelöst. Vorteilhafte Ausgestaltungen sind in den Ansprüchen 2 bis 7 beschrieben.

Bei der erfindungsgemäßen Umrichteranordnung werden bei einer in einem der Umrichter auftretenden Störung (z.B. Kurzschluß) die Zwischenkreise getrennt, so daß der Umrichter und damit der motorseitige Stromrichter (Wechselrichter) mit zugehörigem Fahrmotor weiter in Betrieb bleibt. Bei einer Lokomotive, bei der beide Fahrmotoren je Drehgestell über eine Umrichteranordnung gespeist werden, ergibt sich - bezogen auf ein Drehgestell - nur eine Verminderung der Anfahrmomente um 50 %. Damit stehen noch 75 % der Anfahrzugkraft der Lokomotive zur Verfügung. Dadurch kann die Lok trotz eines Kurzschlusses in einem der Umrichter ihre Fahrt mit verminderter Geschwindigkeit fortsetzen. Der Einsatz einer Lok zum Abschleppen sowie die dann unvermeidlichen Fahrplanstörungen werden vermieden.

Bei einer Umrichteranordnung gemäß Anspruch 3 können die Stützkondensatoren im Gleichspannungs-Zwischenkreis kleiner dimensiondiert werden, so daß sich eine besonders raumsparende Ausführungsform ergibt.

Ist eine Rückspeisung des Stromes in das Netz erwünscht, so kann der Umrichteranordnung gemäß Anspruch 4 ausgeführt werden; die steuerbaren Halbleiter-Elemente sind hierbei in vorteilhafter Weise als GTO-Thyristoren ausgebildet. Für bestimmte Anwendungfälle können auch Transistoren, insbesondere IGBTs (Insulated Gate Bipolar Transistors) eingesetzt werden. Speziell bei IGBTs ist dann nur ein geringer Aufwand zur Ansteuerung erforderlich.

Werden jeweils zwei Gleichrichter-Dioden und die dazu antiparallel geschalteten GTO-Thyristoren zu einem baugleichen Stromrichtermodul zusammengefaßt, dann können sowohl die Vierquadranten-Steller als auch die Pulswechselrichter auf einfache Weise aus derartigen Stromrichtermodulen gebildet werden. Liegt die Umrichteranordnung an einer einphasigen Spannung an, dann werden für jeden Vierquadranten-Steller zwei Stromrichtermodule benötigt. Bei Verwendung von Stromrichtermodulen im Wechselrichter entspricht deren Anzahl der Phasenzahl des Motors.

Die Erfindung sowie weitere vorteilhafte Ausgestaltungen werden im folgenden anhand von in der Zeichnung dargestellten Ausführungsbeispielen näher erläutert.
Darin zeigen:
- FIG 1: eine einpolige Darstellung der erfindungsgemäßen Umrichteranordnung im Blockschaltbild,
- FIG 2: ein Prinzip-Schaltbild einer Ausführungsform der Umrichteranordnung gemäß FIG 1 mit Gleichrichterbrücken in den Umrichtern,
- FIG 3: ein Prinzip-Schaltbild gemäß FIG 2 jedoch mit Vierquadranten-Stellern anstelle der Gleichrichterbrücken.

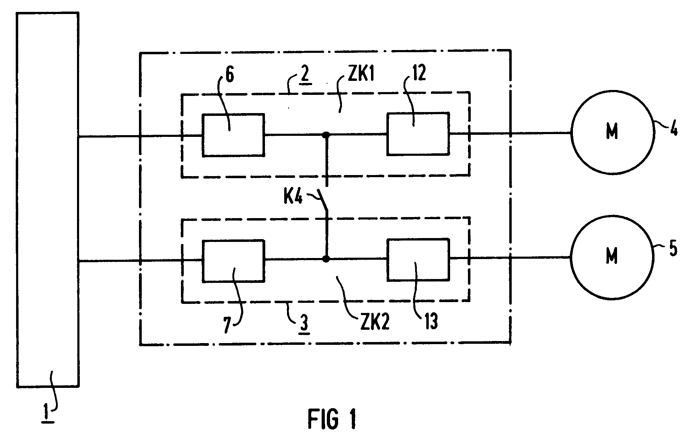

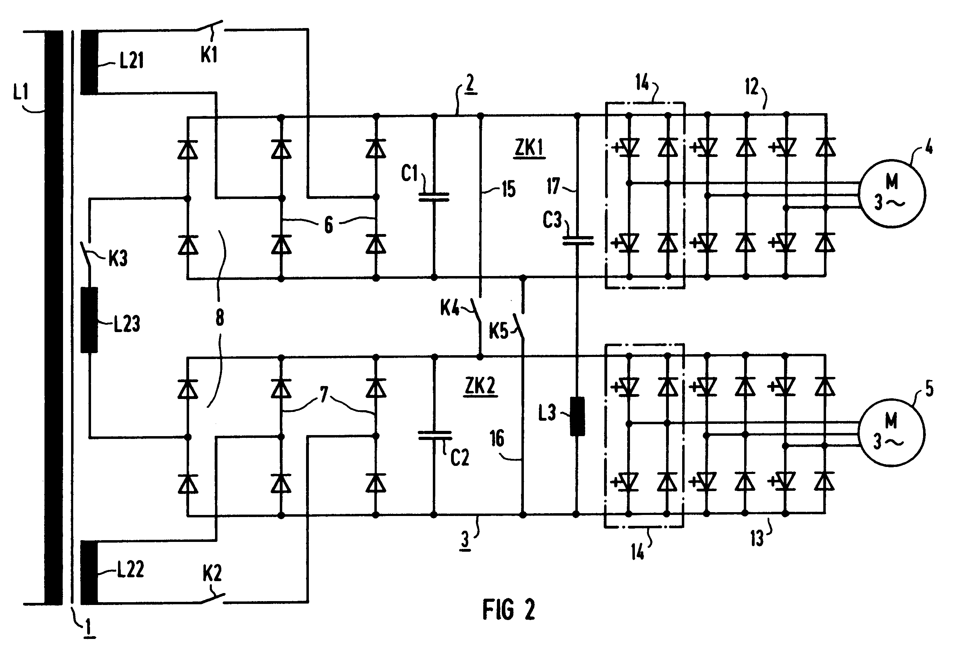

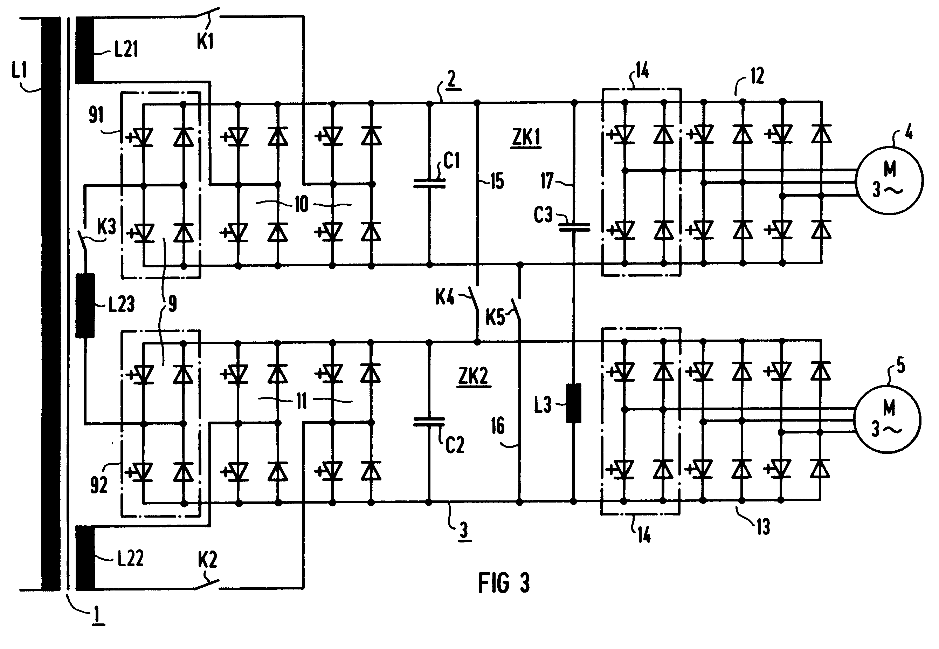

In FIG 1 ist mit 1 ein Eingangsteil bezeichnet, das bei den Ausführungsbeispielen gemäß FIG 2 und 3 als Transformator ausgebildet ist. Dem Eingangsteil 1 ist eine strichpunktiert umrahmte Umrichteranordnung nachgeschaltet. Die Umrichteranordnung besteht aus einer der Anzahl der Antriebsmotoren entsprechenden Anzahl von Umrichtern (in FIG 1 gestrichelt umrahmt). Die in den FIG 1 bis 3 dargestellten Ausführungsbeispiele umfassen jeweils zwei Umrichter 2,3 sowie zwei Antriebsmotoren 4,5.

Jeder Umrichter 2 bzw.3 besteht aus wenigstens einem an das Eingangsteil 1 geschalteten Eingangs-Stromrichter 6 bzw.7, einem Zwischenkreis ZK1 bzw.ZK2 und einem motorseitigen Stromrichter 12 bzw.13. Die beiden Umrichter 2 bzw.3 sind über wenigstens einen Schalter K4 verbindbar. Bei einer in einem der Umrichter 2,3 auftretenden Störung (z.B. Kurzschluß im Zwischenkreis) werden die Zwischenkreise ZK1,ZK2 voneinander getrennt, so daß der ungestörte Umrichter (z.B. der Umrichter 3) und damit der motorseitige Stromrichter (z.B. Stromrichter 13) mit zugehörigem Antriebsmotor (z.B. Antriebsmotor 5) weiter in Betrieb bleibt.

Die Eingangs-Stromrichter können z.B. als Gleichrichterbrücken (FIG 2) oder als Vierquadranten-Steller (FIG 3) ausgebildet sein. Die motorseitigen Stromrichter sind in den FIG 2 und 3 als Pulswechselrichter ausgebildet.

Bei den in FIG 2 und 3 dargestellten Ausführungsbeispielen wird die Umrichteranordnung von Wechselstrom gespeist. Der Transformator 1 weist eine an einer einphasigen Spannung anliegende Primärwicklung sowie eine erste, zweite und dritte Sekundärwicklung L21, L22,L23 auf. Die Sekundärwicklungen L21,L22,L23 sind über zwei Umrichter 2,3 an jeweils einen mehrphasigen Antriebsmotor 4 bzw.5 geschaltet.

In den Umrichtern 2,3 sind eine der Anzahl der Sekundärwicklungen L21,L22,L23 entsprechende Anzahl von Gleichrichterbrücken 6,7,8 (FIG 2) bzw. Vierquadranten-Stellern 9,10,11 (FIG 3) angeordnet. Jeder Vierquadranten-Steller 9,10,11 umfaßt zwei Stromrichtermodule, die jeweils aus zwei GTO-Thyristoren und zwei zu diesen antiparallel geschalteten Dioden bestehen. In FIG 2 sind aus Gründen der Übersichtlichkeit nur beim Vierquadranten-Steller 9 die Stromrichtermodule 91,92 mit Bezugszeichen versehen und strichpunktiert umgrenzt. Die Gleichrichterbrücken 6,7,8 bzw. Vierquadranten-Steller 9,10,11 sind über jeweils einen Schalter K1,K2,K3 an die Sekundärwicklungen L21,L22,L23 schaltbar.

Bei drei Sekundärwicklungen L21,L22,L23 und zwei Umrichtern 2,3 ist die erste Sekundärwicklung L21 mit der Gleichrichterbrücke 6 des Umrichters 2 und die zweite Sekundärwicklung L22 mit der Gleichrichterbrücke 7 des Umrichters 3 verbunden. Die dritte Sekundärwicklung L23 ist über eien dritten Schalter K3 an die dritte Gleichrichterbrücke 8 anschaltbar, die sowohl zu der Gleichrichterbrücke 6 des Umrichters 2 als auch zu der Gleichrichterbrücke 7 des Umrichters 3 parallel liegt.

Analog zu der Verschaltung der Gleichrichterbrücken 6,7,8 in FIG 2 sind auch die Vierquadranten-Steller 9,10,11 in FIG 3 geschaltet. Die nicht mit Bezugszeichen versehenen Stromrichtermodule des Vierquadranten-Stellers 10 sind im Umrichter 2 und die ebenfalls nicht mit Bezugszeichen versehenen Stromrichtermodule des Vierquadranten-Stellers 11 sind im Umrichter 3 angeordnet. Das Stromrichtermodul 91 des Vierquadranten-Stellers 9 ist dem Umrichter 2 und das Stromrichtermodul 92 des Vierquadranten-Stellers 9 ist dem Umrichter 3 zugeordnet.

In jedem Umrichter 2,3 ist ferner ein mit dem Antriebsmotor 4 bzw.5 verbundener Pulswechselrichter 12 bzw.13 angeordnet. Die Pulswechselrichter 12 bzw.13 bestehen aus einer der Phasenzahl des Antriebsmotors 4 bzw.5 entsprechenden Anzahl von Stromrichtermodulen 14. Der Aufbau der Stromrichtermodule 14 entspricht dem Aufbau der Stromrichtermodule 91 und 92.

Die Gleichrichterbrücken 6,7,8 bzw. Vierquadranten-Steller 9,10,11 sind über Zwischenkreise ZK1 und ZK2 mit den Pulswechselrichtern 12 bzw.13 gekoppelt. Die Zwischenkreise ZK1 und ZK2 weisen jeweils einen Stützkondensator C1 bzw.C2 auf, der parallel zu den Gleichrichterbrücken 6,7,8 (FIG 2) bzw. zu den Vierquadranten-Stellern 9,10,11 sowie den Pulswechselrichtern 12,13 angeordnet ist.

Die Verbindung der Pluspole der Zwischenkreise ZK1 und ZK2 erfolgt über eine Verbindungsleitung 15, die über einen Schalter K4 trennbar ist. Entsprechend sind die Minuspole der Zwischenkreise ZK1 und ZK2 über eine Verbindungsleitung 16, die über einen Schalter K5 trennbar ist, miteinander verbunden.

Parallel zu den Stützkondensatoren C1 und C2 ist ein Saugkreis 17 vorgesehen, der z.B. zwischen dem Pluspol des Zwischenkreises ZK1 und dem Minuspol des Zwischenkreises ZK2 angeordnet ist und der einen Kondensator C3 und eine dazu in Reihe geschaltete Induktivität L3 umfaßt.

Aufgrund der getrennten Sekundärwicklungen ist eine versetzte Taktung der steuerbaren Halbleiterelemente in den Gleichrichterbrücken 6,7,8 bzw. den Vierquadranten-Stellern 9,10,11 möglich. Man erhält dadurch sowohl in den Zwischenkreisen ZK1,ZK2 als auch in der Primärwicklung L1 des Transformators 1 geringere Oberschwingungsströme.

Im ungestörten Betrieb sind alle Schalter K1 bis K5 geschlossen. Die beiden Stützkondensatoren C1 und C2 mit den angeschlossenen Gleichrichterbrücken (FIG 2) bzw. Stromrichtermodulen (FIG 3) liegen parallel. Tritt nun ein Störfall auf, z.B. Kurzschluß im Zwischenkreis ZK1 des Umrichters 2, so werden die Schalter K1,K3 und K5 geöffnet. Der Umrichter 2 und damit der Antriebsmotor 4 sind dann außer Betrieb. Es ergibt sich damit ein Verlust von 2/3 der Leistung und von 50 % des Anfahrmoments, da nur noch die Gleichrichterbrücke 7 bzw. der Vierquadranten-Steller 11 über den geschlossenen Schalter K2 in den Zwischenkreis ZK2 einspeist, so daß nur noch der Pulswechselrichter 13 des Umrichters 3 in Betrieb ist und den Antriebsmotor 5 mit Spannung versorgt.

Der Saugkreis 17 ist über den Schalter K4 weiterhin zum Stützkondensator C2 des Zwischenkreises ZK2 parallel geschaltet. Der Zwischenkreis ZK1 liegt dann einpolig auf dem Potential der oberen Leitung des Zwischenkreises ZK2 und die Gleichrichterbrücken 6,7 (FIG 2) bzw. die Vierquadranten-Steller 9,10 (FIG 3) sind über die geöffneten Schalter K3 bzw.K1 außer Funktion.

Bei einem Kurzschluß im Zwischenkreis ZK2 des Umrichters 3 ergeben sich analoge Verhältnisse. In diesem Fall öffnen sich die Schalter K2,K3 und K4 und der Umrichter 3 sowie der Antriebsmotor 5 sind dann außer Betrieb.

## Patentansprüche

1. Umrichteranordnung zur Erzeugung einer in Amplitude und Frequenz veränderbaren, mehrphasigen Spannung aus einer vorgegebenen Spannung zur Speisung von wenigstens zwei Motoren (4,5), wobei jedem Motor (4,5) ein aus einer Gleichrichterbrücke (6,7,8), einem Zwischenkreis (ZK1,ZK2) und einem motorseitigen Wechselrichter (12,13) bestehender Umrichter (2,3) zugeordnet ist, wobei die Zwischenkreise (ZK1,ZK2) bei einer auftretenden Störung durch wenigstens einen Schalter (K4,K5) derart trennbar sind, daß der ungestörte Umrichter (2,3) weiterhin betreibbar ist,
**gekennzeichnet** durch folgende Merkmale:
- zur Speisung der Umrichteranordnung ist ein Transformator (1) vorgesehen, der eine an einer einphasigen Spannung anliegende Primärwicklung (L1) sowie eine erste, zweite und dritte Sekundärwicklung (L21,L22,L23) aufweist;
- die erste Sekundärwicklung (L21) ist über einen ersten Schalter (K1) an die Gleichrichterbrücke (6) des einen Umrichters (2) und die zweite Sekundärwicklung (L22) ist über einen zweiten Schalter (K2) an die Gleichrichterbrücke (7) des anderen Umrichters (3) anschaltbar;
- die dritte Sekundärwicklung (L23) ist über einen dritten Schalter (K3) an einer weiteren Gleichrichterbrücke (8) anschaltbar, die sowohl zu der Gleichrichterbrücke (6) des einen Umrichters (2) als auch zu der Gleichrichterbrücke (7) des anderen Umrichters (3) parallel liegt;
- die gleichnamigen Pole der Zwischenkreise (ZK1,ZK2) der beiden Umrichter (2,3) sind über einen vierten Schalter (K4) und einen fünften Schalter (K5) verbindbar.

2. Umrichteranordnung nach Anspruch 1,
**dadurch gekennzeichnet**,
daß die Gleichrichterbrücken (6,7,8) steuerbar sind.

3. Umrichteranordnung nach Anspruch 1 oder 2,
**dadurch gekennzeichnet**,
daß zwischen dem Pluspol des einen Zwischenkreises (ZK1) und dem Minuspol des anderen Zwischenkreises (ZK2) ein Saugkreis (17) angeordnet ist, der wenigstens einen Kondensator (C3) und wenigstens eine dazu in Reihe geschaltete Induktivität (L3) umfaßt.

4. Umrichteranordnung nach einem der Ansprüche 1 bis 3,
**dadurch gekennzeichnet**,
daß den Dioden der Gleichrichterbrücken (6,7,8) steuerbare Halbleiter-Elemente antiparallel geschaltet sind.

5. Umrichteranordnung nach einem der Ansprüche 1 bis 4,
**dadurch gekennzeichnet**,
daß der Wechselrichter (12,13) als Pulswechselrichter ausgebildet ist und zu den steuerbaren Halbleiter-Elementen Dioden antiparallel geschaltet sind.

6. Umrichteranordnung nach Anspruch 4 oder 5,
**dadurch gekennzeichnet**,
daß die steuerbaren Halbleiter-Elemente als GTO-Thyristoren oder Transistoren ausgebildet sind.

7. Umrichteranordnung nach Anspruch 4 und 6,
**dadurch gekennzeichnet**,
daß jeweils eine Gleichrichterbrücke (6,7,8) mit den dazu antiparallel geschalteten GTO-Thyristoren bzw. Transistoren einen Vierquadranten-Steller (9,10,11) bildet.

## Claims

1. Converter arrangement for generating a polyphase voltage, the amplitude and frequency of which are variable, from a given voltage in order to feed at least two motors (4, 5), wherein associated with each motor (4, 5) there is one converter (2, 3) which consists of a rectifier bridge (6, 7, 8), an intermediate circuit (ZK1, ZK2) and an inverter (12, 13) on the motor side, wherein it is possible to separate the intermediate circuits (ZK1, ZK2), when a disturbance occurs, by means of at least one switch (K4, K5) in such a way that the converter (2, 3) which is not disturbed can be operated further, characterised by the following features:
- a transformer (1) is provided to feed the converter arrangement, which transformer has a primary winding (L1), which is connected to a monophase voltage, and also a first, second and third secondary winding (L21, L22, L23);
- the first secondary winding (L21) can be connected, by way of a first switch (K1), to the rectifier bridge (6) of the one converter (2), and the second secondary winding (L22) can be connected, by way of a second switch (K2), to the rectifier bridge (7) of the other converter (3);
- the third secondary winding (L23) can be connected, by way of a third switch (K3), to a further rectifier bridge (8) which is connected in parallel both with the rectifier bridge (6) of the one converter (2) and with the rectifier bridge (7) of the other converter (3);
- the like poles of the intermediate circuits (ZK1, ZK2) of the two converters (2, 3) can be linked by way of a fourth switch (K4) and a fifth switch (K5).

2. Converter arrangement according to claim 1, characterised in that the rectifier bridges (6, 7, 8) are controllable.

3. Converter arrangement according to claim 1 or 2, characterised in that arranged between the positive pole of the one intermediate circuit (ZK1) and the negative pole of the other intermediate circuit (ZK2) there is a series resonant circuit (17) which comprises at least one capacitor (C3) and at least one inductor (L3) connected in series therewith.

4. Converter arrangement according to one of the claims 1 to 3, characterised in that controllable semiconductor elements are connected in anti-parallel with the diodes of the rectifier bridges (6, 7, 8).

5. Converter arrangement according to one of the claims 1 to 4, characterised in that the inverter (12, 13) is formed as a pulse-controlled inverter and diodes are connected in anti-parallel with the controllable semiconductor elements.

6. Converter arrangement according to claim 4 or 5, characterised in that the controllable semiconductor elements are formed as GTO-thyristors or transistors.

7. Converter arrangement according to claim 4 and 6, characterised in that in each case one rectifier bridge (6, 7, 8) with the GTO-thyristors or transistors connected in antiparallel therewith forms a four-quadrant controller (9, 10, 11).

## Revendications

1. Dispositif convertisseur destiné à produire une tension polyphasée, dont l'amplitude et la fréquence peuvent être changées, à partir d'une tension prescrite destinée à alimenter au moins deux moteurs (4,5), un convertisseur (2,3) constitué d'un pont redresseur (6,7,8), d'un circuit intermédiaire (ZK1, ZK2) et d'un onduleur (12,13) du côté du moteur étant associé à chaque moteur (4,5), les circuits intermédiaires (ZK1, ZK2) pouvant être séparés, lorsqu'il apparaît une perturbation, par au moins un interrupteur (K4, K5), de sorte que le convertisseur (2,3) non perturbé puisse continuer à fonctionner, caractérisé par les particularités suivantes :
- il est prévu, pour alimenter le dispositif convertisseur, un transformateur (1) , qui comporte un enroulement primaire (L1), auquel est appliquée une tension monophasée, ainsi que des premier, deuxième et troisième enroulements secondaires (L21, L22, L23);
- le premier enroulement secondaire (L21) peut être branché par l'intermédiaire d'un premier interrupteur (Kl) au pont (6) redresseur de l'un (2) des convertisseurs et le deuxième enroulement (L22) secondaire peut être branché par l'intermédiaire d'un deuxième interrupteur (K2) au pont redresseur (7) de l'autre convertisseur (3);
- le troisième enroulement secondaire (L23) peut être branché par l'intermédiaire d'un troisième interrupteur (K3) à un autre pont (8) redresseur, qui est en parallèle à la fois au pont (6) redresseur de l'un (2) des convertisseurs et au pont (7) redresseur de l'autre convertisseur (3);
- les pôles de même nom des circuits intermédiaires (ZK1, ZK2) des deux convertisseurs (2,3) peuvent être reliés par l'intermédiaire d'un quatrième interrupteur (K4) et d'un cinquième interrupteur (K5).

2. Dispositif convertisseur suivant la revendication 1, caractérisé en ce que les ponts redresseurs (6, 7, 8) peuvent être commandés.

3. Dispositif convertisseur suivant la revendication 1 ou 2, caractérisé en ce qu'un circuit résonnant (17) en série, qui comprend au moins un condensateur (C3) et au moins une inductance (L3) branchée en série avec ce condensateur, est disposé entre le pôle positif de l'un (ZK1) des circuits intermédiaires et le pôle négatif de l'autre circuit intermédiaire (ZK2).

4. Dispositif convertisseur suivant l'une des revendications 1 à 3, caractérisé en ce que des éléments à semiconducteur commandables sont branchés de manière antiparallèle par rapport aux diodes des ponts redresseurs (6,7, 8).

5. Dispositif convertisseur suivant l'une des revendications 1 à 4, caractérisé en ce que l'onduleur (12, 13) est formé en tant qu'onduleur à impulsions et les diodes sont branchées de manière antiparallèle par rapport aux éléments à semiconducteur commandables.

6. Dispositif convertisseur suivant la revendication 4 ou 5, caractérisé en ce que les éléments à semiconducteur commandables sont formés en tant que thyristors GTO ou transistors.

7. Dispositif convertisseur suivant la revendication 4 et 6, caractérisé en ce que chaque pont redresseur (6,7,8) forme, avec les thyristors GTO ou transistors, qui sont branchés de manière antiparallèle par rapport à ces ponts redresseurs, un régulateur (9,10,11) à quatre quadrants.
